# EUROPEAN PATENT APPLICATION

(11) **EP 0 915 623 A1**
(43) Date of publication of application: **12.05.1999**
(21) Application number: 98402646.8
(22) Date of filing: 23.10.1998
(51) Int. Cl.: H04N 7/26, H04N 7/58

(54) **Device for processing coded video data and systems for distributing programmes using such a device**

(30) Priority: 06.11.1997 FR 9713975
(71) Applicant: THOMSON BROADCAST SYSTEMS, 95800 Cergy Saint-Christophe (FR)
(72) Inventor: Perron, Claude, 92648 Boulogne Cédex (FR)
(74) Representative: Zhang, Jianguo

(57) **Abstract**

The present invention relates to a device (D) for processing video data (VD1) coded according to a first set (Q) of values of coding parameters, characterized in that it comprises first means (1) for decoding the coded video data, second means (2) for retrieving the values (Q) of the coding parameters from the coded video data, third means (3) for modifying at least one value of the coding parameters of the said first set (Q) on the basis of a bit rate instruction value (CS) and for generating a second set (C) of values of coding parameters, and fourth means (4) for coding the decoded video data emanating from the first means (1) under the action of the second set (C) of values of coding parameters.

The present invention applies to systems for distributing programmes such as, for example, systems for distributing programmes by satellite.

## Description

The invention relates to a device for processing coded video data.

The invention also relates to various systems for distributing video and/or audio data and, more particularly, to systems for distributing video and/or audio data originating from archived data sources.

By way of non-limiting example, a system for distributing video data originating from archived data sources can be an video-on-demand system.

The archived data sources, commonly referred to as server sources, contain compressed data. The data is compressed by coding such as, for example, coding according to the MPEG 2 video standard. The coding algorithm implemented then describes the images block-wise, exploiting the spatial redundancy and temporal redundancy of the images.

According to the prior art, the various archived sources are distributed over the same channel by way of a multiplexer. The bit rate of each programme source is a fixed bit rate. It is not then possible to optimize the multiplexing of the sources so as to take into account the greater or lesser relative complexity of the images which are distributed.

This drawback is all the greater when a large number of archived sources is to be distributed. This is the case, for example, in video-on-demand systems in which the same programme is distributed at regular intervals of time.

Video-on-demand systems are used, for example, within the framework of satellite broadcasting. Within the framework of satellite broadcasting of programmes, for QPSK modulation of the signals transmitted (the initials QPSK standing for "Quadrature Phase Shift Keying"), the bit rate of the data is, for example, equal to 40 Megabits/s per broadcasting channel. It follows that, for programmes whose bit rate is fixed, for example, at 4 Megabits/s, the maximum number of programmes which can be transmitted simultaneously on the same channel is equal to 10. This maximum number of programmes can be increased by using devices according to the invention.

The invention relates to a device for processing video data coded according to a first set of values of coding parameters, characterized in that it comprises first means for decoding the coded video data, second means for retrieving the values of the coding parameters from the coded video data, third means for modifying at least one value of the coding parameters of said first set on the basis of a bit rate instruction value and for generating a second set of values of coding parameters, and fourth means for coding the decoded video data emanating from the first means under the action of the second set of values of coding parameters.

The invention also relates to a device for processing a stream of data consisting of non-video data and of video data coded according to a first set of values of coding parameters, characterized in that it comprises a demultiplexer for separating the non-video data and the coded video data, first means for decoding the coded video data, second means for retrieving the values of the coding parameters from the coded video data, third means for modifying at least one value of the coding parameters of said first set on the basis of a bit rate instruction value and for generating a second set of values of coding parameters, fourth means for coding the decoded video data emanating from the first means under the action of the second set of values of coding parameters, means for delaying the non-video data and a multiplexer allowing the coded video data emanating from the fourth means and the delayed non-video data to be gathered together into the same data stream.

The invention also relates to a system for distributing programmes comprising, on the one hand, at least one source of compressed data in the form of video data coded according to a first set of values of coding parameters and of non-video data consisting of audio data and of data relating to at least one programme of the video and audio data and, on the other hand a multiplexer allowing the programmes emanating from at least one source to share the same broadcasting channel, characterized in that it comprises:
- a decision facility making it possible to calculate at least one bit rate instruction from a set of data which it receives and,
- placed in series between each source of data and a input of the multiplexer, a device according to Claim 2, the set of data which the decision facility receives consisting of the various signals which represent the values of the coding parameters of the video data emanating from each device according to Claim 2, each bit rate instruction being applied to the device according to Claim 2 which corresponds thereto.

The invention further relates to a device for processing a data stream consisting of video data coded according to a first set of values of coding parameters, of coded audio data and of data relating to at least one programme associated with video and audio data, characterized in that it comprises a demultiplexer for separating the coded video data, the coded audio data and said data relating to at least one programme, an audio decoder of the coded audio data, a circuit for processing the data relating to at least one programme, a video decoder for decoding the coded video data, a circuit for retrieving data representing the values of the coding parameters from the coded video data, and a multiplexer allowing the decoded video data, the decoded audio data, the data relating to at least one programme and the data representing the values of the first set of coding parameters to be gathered together into the same data stream.

The invention further relates to a device for processing a stream of data consisting of non-coded video data, of audit data, of data relating to at least one programme of video and audio data and of data representing a first set of values of video data coding parameters, characterized in that it comprises a demultiplexer for separating the non-coded video data, the data representing the first set of values of video data coding parameters, the audio data and the data relating to at least one programme, an audio data coding circuit, a circuit for processing the data relating to at least one programme, a circuit for coding the video data under the action of a second set of values of coding parameters, a circuit to which are applied the data representing the first set of values of video data coding parameters and making it possible to modify the value of at least one of the coding parameters under the action of an instruction so as to construct the second set of values of coding parameters, and a multiplexer allowing the coded video data emanating from the coding circuit, the audio data and the data relating to at least one programme to be gathered together into the same data stream.

The invention further relates to a system for distributing programmes comprising, on the one hand, at least one source of compressed data in the form of video data coded according to a first set of values of coding parameters and of non-video data consisting of audio data and of data relating to at least one programme of video and audio data and, on the other and, a multiplexer allowing the programmes emanating from at least one source to share the same broadcasting channel, characterized in that it comprises:
- a decision facility making it possible to calculate at least one bit rate instruction from a set of data which it receives and,
- a sub-assembly consisting, in series, of a device according to Claim 4, of a processing circuit and of a device according to Claim 5, the sub-assembly being placed in series between a source of data and an input of the multiplexer,
- the set of data which the decision facility receives consisting of the various signals which represent the values of the coding parameters of the video data emanating from each device according to Claim 4, each bit rate instruction being applied to the device according to Claim 5 which corresponds thereto.

An advantage of the invention is that it increases the number of programmes which can be distributed from archived data sources.

More generally, the invention also makes it possible to increase the number of programmes which can be distributed from compressed data sources, whether these data are archived or non-archived. Thus, as will emerge subsequently, the invention applies advantageously to various devices which make up a chain of the image from a source point, where the video and audio data are compressed, to a data distribution point.

Other characteristics and advantages of the invention will emerge on reading a preferred embodiment given with reference to the herein appended figures in which:
- Figure 1 represents a device for processing coded video data according to the invention;
- Figure 2 represents, according to the invention, a first device for processing coded video data and non-video data comprising a device for processing data such as the one represented in Figure 1;
- Figure 3 represents, according to the invention, a second device for processing coded video data and non-video data comprising a device for processing data such as the one represented in Figure 1;
- Figure 4 represents, according to the invention, a system for distributing programmes originating from compressed data sources comprising at least one device for processing data such as the one represented in Figure 3;
- Figure 5 represents, according to the invention, a third device for processing coded video data and non-video data;
- Figure 6 represents, according to the invention, a device for processing video data and non-video data;
- Figure 7 represents, according to the invention, a system for distributing programmes originating from compressed data sources using at least one device for processing data such as the one represented in Figure 5 and at least one device for processing data such as the one represented in Figure 6.

In all the figures, the same labels denote the same elements.

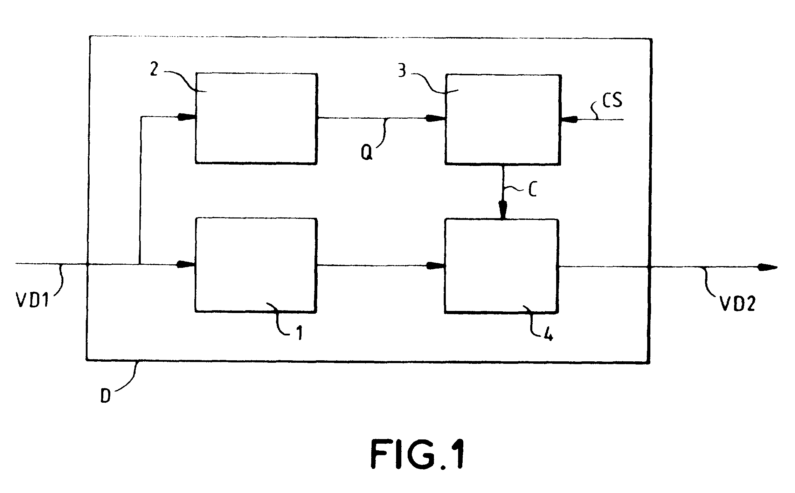

Figure 1 represents a device for processing coded video data according to the invention.

The device D represented in Figure 1 comprises a video decoder 1, a circuit 2 making it possible to retrieve, in clear, values of coding parameters from coded video data, a circuit 3 making it possible to modify at least one coding parameter value on the basis of a bit rate instruction CS and a circuit 4 for coding video data.

The various circuits contained in the coding circuit 4 can consist, in whole or part, of a circuit for horizontal and vertical filtering, a circuit for rearranging the video data, a motion estimator, a coding decision block, a circuit for carrying out the operation commonly referred to as a discrete cosine transform and denoted DCT, a circuit for quantizing the coefficients emanating from the DCT, a variable-length coder and a buffer memory.

The coded video data which enter the device D constitute a constant bit-rate stream of data VD1 emanating, for example, from an archived source or, more generally, from a sours emanating from. a compression step, which is not represented in Figure 1. The video data VD1 are forwarded to the decoder 1 and to the circuit 2.

The decoder 1 decodes the video data VD1 and forwards the decoded video data to the coding circuit 4. The circuit 2 generates, from the coded video data VD1, a signal Q consisting of data representing the values of the various coding parameters having served to code the video data. The signal Q is applied to the circuit 3. Under the action of the bit rate instruction CS, the circuit 3 modifies the value of at least one of the coding parameters. According to the preferred embodiment of the invention, only the value of the coding parameter relating to the quantizing of the coefficients emanating from the DCT is modified. However, the invention relates to the more general case in which the values of other coding parameters are modified.

A new set of values of coding parameters is then generated by the circuit 3 in the form of a command C applied to the coder 4. This new set of values of the coding parameters consists of the unmodified values of the coding parameters and of the modified values of the coding parameters.

Under the action of the command C, the video data are coded by the circuit 4 so as to constitute a stream of data VD2 whose bit rate is different from the bit rate of the data VD1.

Advantageously, the bit rate of the data VD2 can thus vary as a function of the instruction CS applied to the circuit 3.

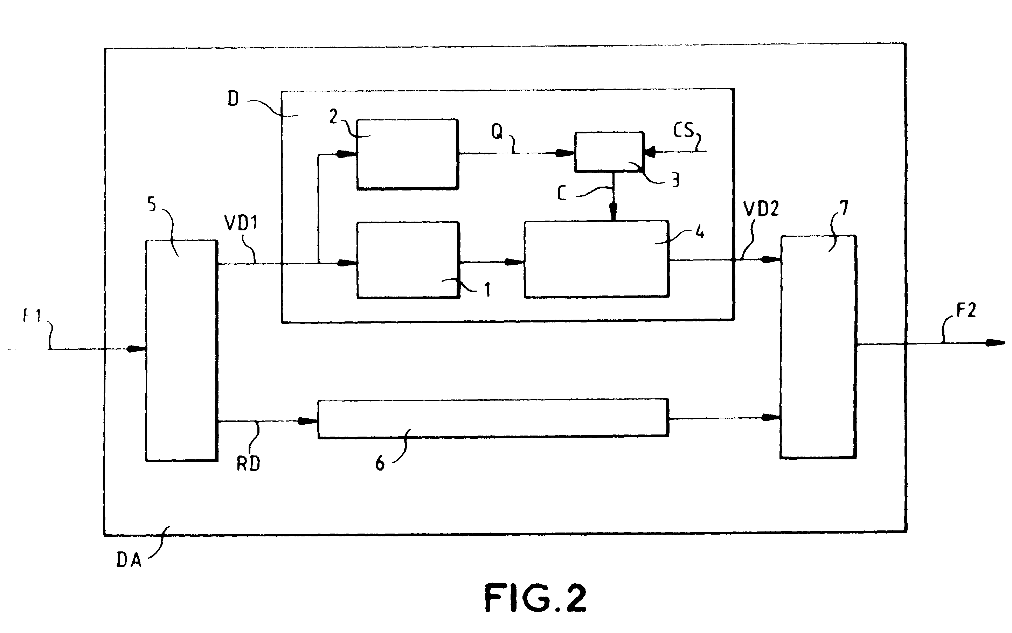

Figure 2 represents, according to the invention, a first device for processing coded video data and non-video data comprising a device for processing coded video data such as the one described in Figure 1.

The device DA of Figure 2 comprises a demultiplexer 5, a device D, a delay circuit 6 and a multiplexer 7.

The stream F1 of data which enter the device DA is a constant bit-rate stream of data emanating from a compressed data source such as, for example, a compressed archived data source. This compressed data source is not represented in Figure 2.

According to the preferred embodiment of the invention, the stream F1 consists of data representing a video programme according to the format commonly denoted SPTS (the initials SPTS standing for "Single Programme Transport Stream"). The stream F1 therefore consists of a succession of packets of video data, of packets of audio data and of packets of data relating to at least one programme consisting of video and audio data.

The stream F1 is applied to the demultiplexer 5 whose function is to separate the packets of video data from the remainder of the packets of data contained in the stream. Thus, the packets of video data VD1 are extracted from a first output of the demultiplexer 5 while the packets of non-video data RD are extracted from a second output of the demultiplexer 5.

The packets of video data VD1 are recognized, in a manner known per se, with the aid of an identifier commonly denoted PID (the abbreviation PID standing for "Packet Identifier").

The coded video data VD1 are forwarded to the device D which can modify the bit rate thereof as seen above in such a way as to construct packets of coded video data VD2.

Between the demultiplexer 5 and the multiplexer 7, the non-video data RD are delayed by the circuit 6. The delay circuit 6 can, for example, be a delay line.

The function of the delay circuit 6 is to delay the non-video data RD by the duration of the processing of the video data performed by the device D. By way of non-limiting example, the delay introduced by the device D can be equal to 1.5s or 2s.

A stream F2 of video and non-video data is reconstructed at the output of the multiplexer 7 which receives the packets of video data VD2 on a first input and the delayed non-video data RD on a second input.

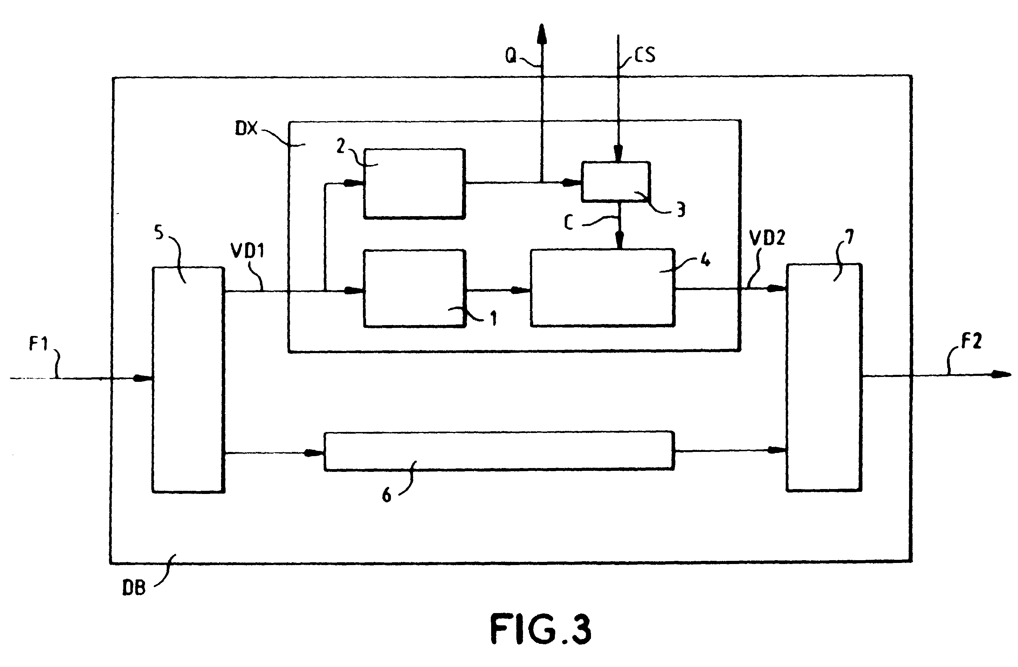

Figure 3 represents, according to the Invention, a second device for processing coded video data and non-video data comprising a device for processing coded video data such as the one represented in Figure 1.

The device DB of Figure 2 comprises a demultiplexer 5, a device DX, a delay circuit 6 and a multiplexer 7.

The stream of the data which enter the device DB is a stream of the same type as the stream F1 mentioned earlier.

The various circuits 5, 6 and 7 are identical to the circuits with the same references mentioned in Figure 2 and provide for the same functions.

Like the device D, the device DX comprises a video decoder 1, a circuit 2 for generating the signal Q consisting of data representing the values of the various coding parameters having served to code the video data, a circuit 3 for modifying at least one value of the coding parameters emanating from the circuit 2 on the basis of an instruction value CS and for generating new coding parameters in the form of a command C and a coding circuit 4 for coding the video data emanating from the circuit 1 under the action of the command C.

Thus, the device DX contains the same circuits 1, 2, 3 and 4 as the device D. The difference between the device DX and the device D consists in the fact that the device DX comprises an output making it possible to forward the signal Q to a decision facility, which is not represented in Figure 3.

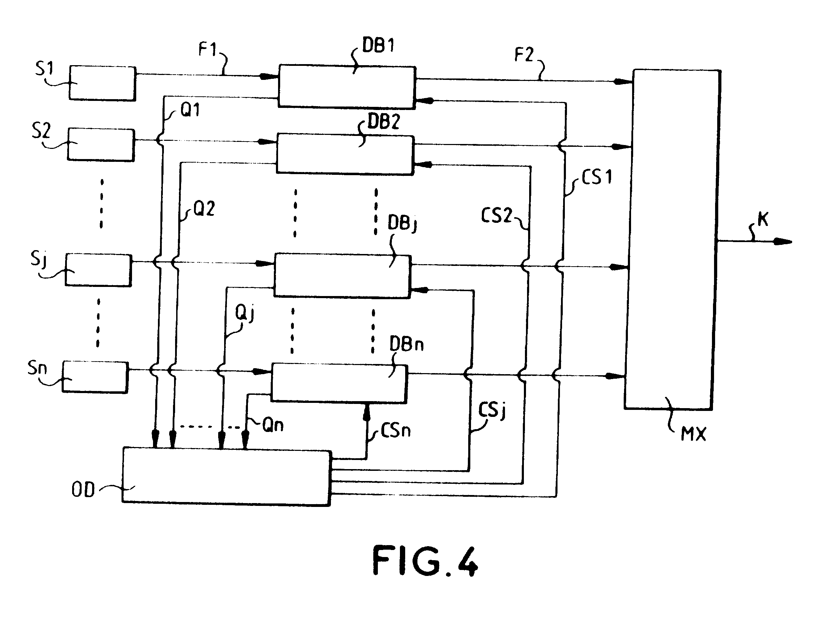

This decision facility additionally receives, as will emerge by way of particular example in the application described in Figure 4, signals of the same kind as the signal Q originating from other devices. These signals of the same kind as the signal Q may originate from devices of the same type as that described in Figure 3 and/or from audio and video coding devices which are known per se and operate according to the MPEG 2 video standard.

The decision facility then makes it possible to allocate an optimal bit rate to the data emanating from the device DX, by of the command C, this optimal bit rate taking into account all the bit rates allocated to the other devices.

In order to reconstruct a stream F2 of video and audio data according to the SPTS format at the output of the device DB, the delayed non-video data RD are multiplexed with the aid of the device 7 with the video data VD2 emanating from the device DX.

Figure 4 represents, according to the invention, a system for distributing programmes originating from compressed data sources comprising at least one device for processing data such as the one represented in Figure 3.

The system of Figure 4 comprises n sources of compressed data S1, S2 ..., Sj, ..., Sn, n data processing devices DB1, DB2 ..., DBj ..., DBn such as the device DB represented in Figure 3, a decision facility OD and a multiplexer MX allowing the various archived sources to share the same broadcasting channel K.

The information which allows the decision facility OD to generate the bit rate instruction CSj applied to the circuit 3 of the device DBj (j = 1, 2, ..., n) consists of the set of signals Qj.

Advantageously, the system for distributing programmes according to the invention such as the one represented in Figure 4 makes it possible to convert each fixed bit-rate coded programme into a variable bit-rate coded programme using information originating from the set of programmes intended to be broadcast.

The system for distributing programmes according to the invention then makes it possible to increase the number of programmes which can be transmitted on the same broadcasting channel, as compared with the prior art solutions.

According to a particular embodiment of the system represented in Figure 4, the n compressed sources can be archived sources supplied by the same sub-assembly consisting of a data source, of 2 reference coder and of an archiving server which are mounted in series. Such a configuration corresponds to the most usual configuration of a video-on-demand system.

According to other embodiments of the invention, the compressed sources, whether they be archived or non-archived, are not supplied by the same sub-assembly as that mentioned above.

As was mentioned earlier, a first advantage of the invention is that it allows a larger number of archived data sources to be transmitted over the same channel than the number of archived data sources which can be transmitted according to the prior art.

Another advantage of the system for distributing programmes such as the one represented in Figure 4 is that it guarantees the independence of the archived data sources whilst permitting the bit rate of these sources to be modified. It is then possible, for example, to substitute one source for another without the system being disturbed in its mode of operation, this being something which does occur in a system for multiplexing archived sources according to the known art.

According to the system represented in Figure 4, the coding of the audio data is not modified. Thus, the system represented in Figure 4 advantageously applies to the case in which at least one source of compressed data contains identical audio data coded according to various bit rates.

This is because, by virtue of the demultiplexer 5, it is possible for the packets of audio data to be chosen just at the time that the video and audio data are broadcast. The invention thus advantageously makes it possible to choose, from among the packets of audio data of each programme, the packets which make it possible to ensure a bit rate for the audio data which is optimal with regard to the bit rate allocated to the video data which are broadcast simultaneously. It is therefore not necessary, according to the invention, to define the bit rare of the audio data a priori.

The system for distributing programmes such as the one represented in Figure 4 makes it possible to optimize the bit rate of the video data emanating from compressed sources. It follows that this system applies in a particularly advantageous manner for guaranteeing good quality of broadcasting of video data at low bit rate.

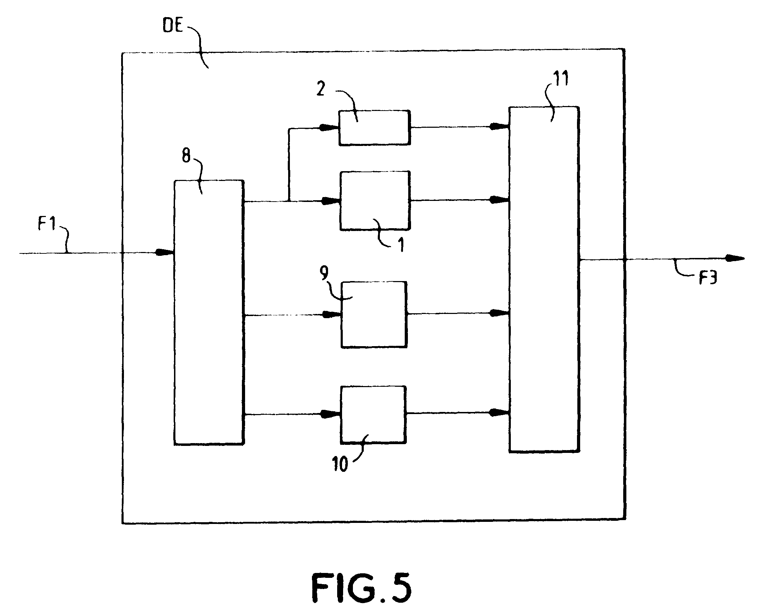

Figure 5 represents, according to the invention, a third device for processing coded video data and non-video data.

The device DE of Figure 5 comprises a demultiplexer 8, a video data decoder 1, a circuit 2, as described earlier, for retrieving the values, in clear, of the coding parameters from coded video data, an audio data decoder 9, a data processing circuit 10 and a multiplexer 11.

The data stream which the device DE receives on its input is a data stream F1 as described earlier. The video and audio data are therefore coded data.

The data stream Fl is applied as input to the demultiplexer 8 whose function is to separate the packets of video data, the packets of audio data and the packets of data relating to at least one programme. The packets of video and audio data and of data relating to at least one programme are recognized in a manner known per se.

The coded video data are applied to the video decoder 1 and to the circuit 2. The coded audio data are applied to the audio decoder 9. The data relating to at least one programme are applied to the circuit 10. The outputs of the circuits 2, 1, 9 and 10 are applied to the multiplexer 11. The signal F3 emanating from the multiplexer 11 is then a fully decoded signal, commonly referred to as the baseband signal, in which, according to a variant of the invention, the data emanating from the circuit 2 are, preferably, multiplexed in the frame blanking intervals.

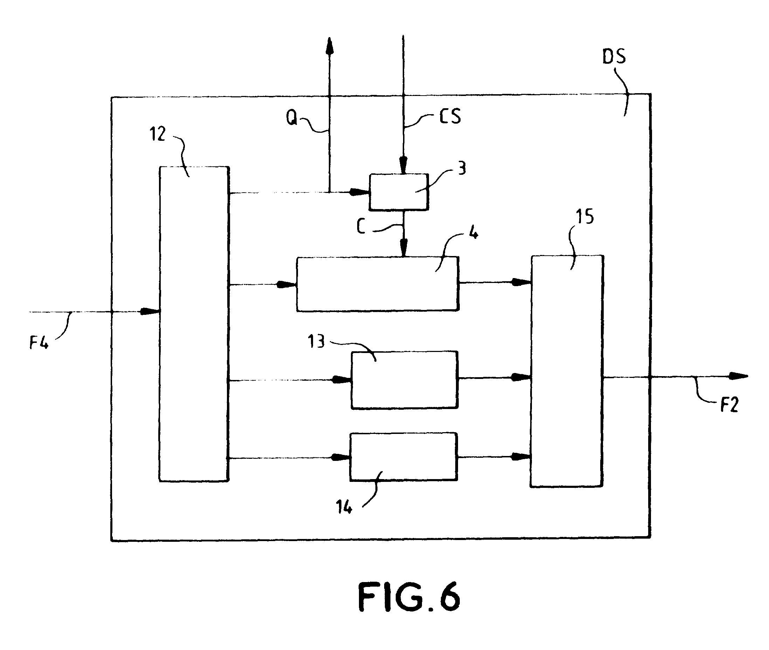

Figure 6 represents, according to the invention, a device for processing video data and non-video data.

The device or Figure 6 comprises a demultiplexer 12, a video data coding circuit 4 such as that mentioned earlier, a circuit 3, as described earlier, for modifying at least one coding parameter value on the basis of a bit rate instruction CS, an audio data coding circuit 13, a data processing circuit 14 and a multiplexer 15.

The stream F4 of data which arrive at the input of the demultiplexer 12 is a data stream of the same type as the stream F3. Thus, the stream F4 comprises decoded audio and video data, data associated with the programme and data constituting a signal Q as defined earlier.

The stream F4 is applied to the input of the demultiplexer 12 whose function is to separate the video data, the audio data, the data associated with the programme and the data constituting the signal Q.

The audio data are applied to the input of the audio data coding circuit 13. The data associated with the programme are applied to the input of the processing circuit 14. The video data are applied to the input of the video coding circuit 4. The signal Q is applied to the input of the circuit 3. Under the action of the bit rate instruction CS, the circuit 3 modifies the value of at least one of the coding parameters, as was mentioned earlier. A new set of values of the coding parameters is then generated by the circuit 3 in the form of a command C applied to the coder 4. Under the action of the command C, the video data are coded by the circuit 4.

As represented in Figure 6, the invention relates to the case in which the value of the instruction CS emanates from a decision facility, not represented in the figure. However, the invention also relates to the case in which the value of the instruction CS does not emanate from a decision facility, as is represented in Figure 2.

The multiplexer 15 receives on its input the coded video data emanating from the coder 4, the coded audio data emanating from the coder 13 and the data associated with the programme and emanating from the processing circuit 14. The stream of data emanating from the multiplexer 15 is then a stream F2 such as that mentioned earlier.

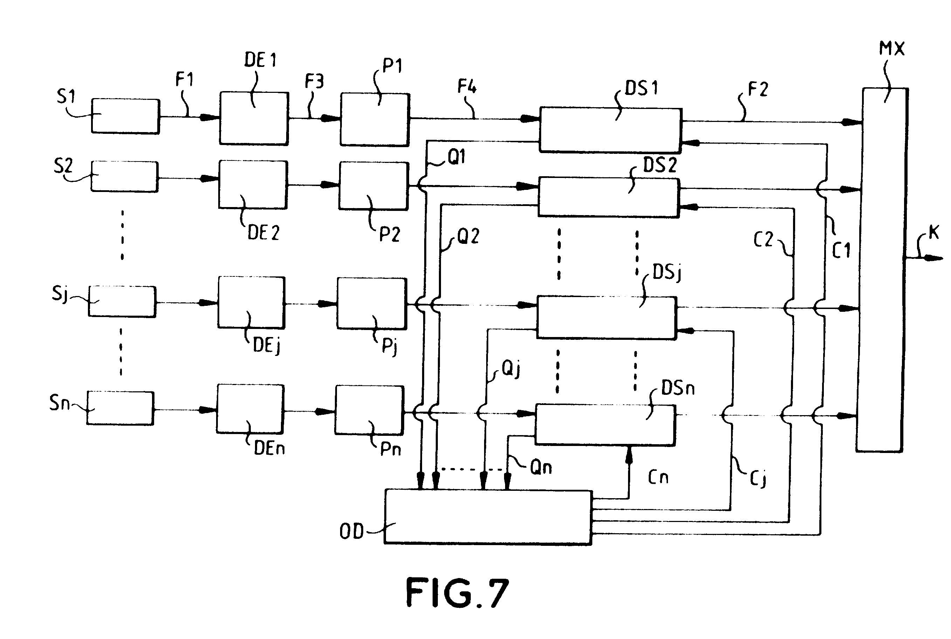

Figure 7 represents, according to the invention, a system for distributing programmes originating from compressed data sources using at least one device for processing data such as the one represented in Figure 5 and at least one device for processing data such as the one represented in Figure 6.

The system represented in Figure 7 comprises n sources of compressed data S1, S2 ..., Sj, ..., Sn, n devices DE1, DE2 ..., DEj ..., DEn such as the device DE described earlier, n devices DS1, DS2 ..., DSj, ..., DSn such as the device DS described earlier, n processing devices P1, P2 ..., Pj, ..., Pn, the device Pj (j=1, 2, ..., n) being in series between the device DEj and the device DSj, a decision facility OD and a multiplexer MX. As in the case of the system described in Figure 4, the information allowing the decision facility DO to generate the instruction CSj applied to the circuit 3 of the device DSj, (j = 1, 2 ..., n) consists of the set of signals Qj.

The compressed data sources can be archived data sources, such as, for example, server sources, or else sources transmitted, for example, by satellite links or terrestrial telecommunication links.

The system represented in Figure 7 has all the advantages of the system represented in Figure 4.

The data emanating from the device DEj (j=1, 2, ..., n) are decoded data. It follows that an additional advantage of the system for distributing programmes such as the one represented in Figure 7 is that it makes it possible for the device Pj (j=1, 2 ..., n) to perform processing operations on data emanating from the device DEj, such as the processing operations commonly performed in a studio such as, for example, switching or mixing with other data.

Advantageously, the system far distributing programmes such as the one represented in Figure 7 also makes it possible to convert the video data from the standard known a one name "4;2;2 / Profile" to the "Main Level / Main Profile" standard.

As is known to the person skilled in the art, a video signal complying with the MPEG 2 standard can be established according to two standards, one standard for data processed in the studio and one standard for data which are broadcast. The standard for the data processed in the studio is the standard known by the name "4:2:2 / Profile" and the standard for data which are broadcast is the standard known by the name "Main Level / Main Profile".

Owing to the similarity between the "4:2:2 / Profile" and "Main Level / Main Profile" standards, conversion from the "4:2:2 / Profile" standard to the "Main Level / Main Profile" standard can be performed, according to the invention, taking into account only coding decisions in respect of the luminance signal. This is particularly advantageous since the luminance data typically represent 80% to 95% of the number of bits of a compressed video signal. Thus, the device according to the invention makes it possible to go from the "4:2:2 / Profile" standard to the "Main Level / Main Profile" standard by modifying, in respect of the luminance signal, just the value of the coding parameter relating to the quantizing of the coefficients emanating from the DCT. The circuit 3 of the device 6 then passes on the coding decision taken with regard to the luminance to the parameters for coding the colour difference signals. The command C applied to the coder 4 of the device 6 then contains, for the luminance and colour difference signals, new values of the coding parameters relating to the quantizing of the coefficients emanating from the DCT.

By way of non-limiting embodiment, the invention finds a particularly beneficial advantage in the case in which the source of archived compressed data is a stand-alone digital video and audio data support such as, for example, a digital video disk known by the abbreviation DVD.

## Claims

1. Device (D) for processing video data (VD1) coded according to a first set (Q) of values of coding parameters, characterized in that it comprises first means (1) for decoding the coded video data, second means (2) for retrieving the values (Q) of the coding parameters from the coded video data, third means (3) for modifying at least one value of the coding parameters of the said first set (Q) on the basis of a bit rate instruction value (CS) and for generating a second set (C) of values of coding parameters, and fourth means (4) for coding the decoded video data emanating from the first means (1) under the action of the second set (C) of values of coding parameters.

2. Device (DA, DB) for processing a stream (Fl) of data consisting of non-video data and of video data (VDl) coded according to a first set (Q) of values of coding parameters, characterized in that it comprises a demultiplexer (5) for separating the non-video data and the coded video data, first means (1) for decoding the coded video data (VD1), second means (2) for retrieving the values (Q) of the coding parameters from the coded video data (VD1), third means (3) for modifying at least one value of the coding parameters of said first set (Q) on the basis of a bit rate instruction value (CS) and for generating a second set (C) of values of coding parameters, fourth means (4) for coding the decoded video data emanating from the first means (1) under the action of the second set (C) of values of coding parameters, means for delaying the non-video data (RD) and a multiplexer (7) allowing the coded video data emanating from the fourth means (VD2) and line delayed non-video data (RD) to be gathered together into the same data stream (F2).

3. System for distributing programmes comprising, on the one hand, at least one source S1, S2, ..., Sj, ..., Sn) of compressed data in the form of video data (VD1) coded according to a first set (Q) of values of coding parameters and of non-video data consisting of audio data and of data relating to at least one programme of the video and audio data and, on the other hand a multiplexer (MX) allowing the programmes emanating from at least one source (S1, S2 **...,** Sj, **...,** Sn) to share the same broadcasting channel (K), characterized in that it comprises:
- a decision facility (OD) making it possible to calculate at least one bit rate instruction (CS1, CS2, ..., CSj, ..., CSn) from a set of data which it receives (Q1, Q2, ..., Qj, ..., Qn) and,
- placed in series between each source (S1, S2 ..., Sj, **...,** Sn) of data and an input of the multiplexer (MX), a device (DB1, DB2 ..., DBj, ..., DBn) according to Claim 2, the set of data which the decision facility (OD) receives consisting of the various signals (Ql, Q2, ..., Qj, ..., Qn) which represent the values of the coding parameters of the video data emanating from each device according to Claim 2, each bit rate instruction (CS1, CS2, ..., CSj, ..., CSn) being applied to the device according to Claim 2 which corresponds thereto.

4. Device (DE) for processing a data stream (F1) consisting of video data coded according to a first set (Q) of values of coding parameters, of coded audio data and of data relating to at least one programme associated with video and audio data, characterized in that it comprises a demultiplexer (8) for separating the coded video data, the coded audio data and the said data relating to at least one programme, an audio decoder (9) of the coded audio data, a circuit (10) for processing the data relating to at least one programme, a video decoder (1) for decoding the coded video data, a circuit (2) for retrieving data (Q) representing the values of the coding parameters from the coded video data (VD1) and a multiplexer (11) allowing the decoded video data, the decoded audio data, the data relating to at least one programme and the data (Q) representing the values of the first set of coding parameters to be gathered together into the same data stream (F3).

5. Device (DS) for processing a stream (F4) of data consisting of non-coded video data, of audio data, of data relating to at least one programme of video and audio data and of data (Q) representing a first set of values of video data coding parameters, characterized in that it comprises a demultiplexer (12) for separating the non-coded video data, the data (Q) representing the first set of values of video data coding parameters, the audio data and the data relating to at least one programme, an audio data coding circuit (13), a circuit (14) for processing the data relating to at least one programme, a circuit (4) for coding the video data under the action of a second set (C) of values of coding parameters, a circuit (3) to which are applied the data (Q) representing the first set of values of video data coding parameters and making it possible to modify the value of at least one of the coding parameters under the action of an instruction (CS) so as to construct the second set (C) of values of coding parameters, and a multiplexer (15) allowing the coded video data emanating from the coding circuit (4), the audio data and the data relating to at least one programme to be gathered together into the same data stream (F2).

6. System for distributing programmes comprising, on the one hand, at least one source (S1, S2 ..., Sj, ..., Sn) of compressed data in the form of video data (VD1) coded according to a first set (Q) of values of coding parameters and of non-video data consisting of audio data and of data relating to a least one programme of video and audio data and, on the other hand, a multiplexer (MX) allowing the programmes emanating from at least one source (S1, S2 ..., Sj ..., Sn) to share the same broadcasting channel (K), characterized in that it comprises:
- a decision facility (OD) making it possible to calculate at least one bit rate instruction (CS1, CS2, ..., CSj, ..., CSn) from a set of data which it receives (Q1, Q2, ..., Qj, ..., Qn) and,
- a sub-assembly consisting, in series, of a device (DE1, DE2 ..., DEj DEn) according to Claim 4, of a processing circuit (P1, P2 ..., Pj, .., Pn) and of a device (DS1, DS2 ..., DSj, ..., DSn) according to Claim 5, the sub-assembly being placed in series between a source (S1, S2 ..., Sj, ..., Sn) of data and an input of the multiplexer (MX),
- the set of data which the decision facility (OD) receives consisting of the various signals (Ql, Q2 ..., Qj, ..., Qn) which represent the values of the coding parameters of the video data emanating from each device according to Claim 4, each bit rate instruction (CS1, CS2, ..., Csj, ..., CSn) being applied to the device according to Claim 5 which corresponds thereto.

7. System for distributing programmes according to Claim 6, characterized in that at least one processing circuit (Pl, P2, ..., Pj, ..., Pn) is a circuit making it possible to put data according to the "4:2:2 / Profile" standard, emanating from a device according to Claim 4, into the "Main Level / Main Profile" standard.

8. System for distributing programmes according to either one of Claims 3 and 6, characterized in that at least one source of compressed data is a source of archived data.

9. System for distributing programmes according to Claim 8, characterized in that the source of archived data is a stand-alone support for digital video and audio data.
